(19) Europäisches Patentamt
European Patent Office
Office européen des brevets

(11) EP 1 142 912 A1

(12) # EUROPEAN PATENT APPLICATION

(43) Date of publication:
**10.10.2001 Bulletin 2001/41**

(51) Int Cl.⁷: **C08F 2/50**, C08F 290/06

(21) Application number: **00201234.2**

(22) Date of filing: **05.04.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **DSM N.V.**
**6411 TE Heerlen (NL)**

(72) Inventors:
- **Sensarma, Soumen**
**6166 BZ Geleen (NL)**
- **Dias, Aylvin Jorge Angelo Athanasius**
**6221 JD Maastricht (NL)**
- **Jansen, Johan Franz Gradus Antonius**
**6165 AP Geleen (NL)**
- **Dorchu, Marko**
**6191 CH Beek (NL)**

(74) Representative: **den Hartog, Jeroen H.J. et al**
**DSM Patents & Trademarks**
**Office Geleen**
**P.O. Box 9**
**6160 MA Geleen (NL)**

(54) **Radiation curable compositions**

(57) The invention relates to a composition comprising

(a) at least a radiation curable component consisting of at least a radiation curable oligomer and a radiation curable diluent, at least 10% of this component having a functionality of 2 or more, this component representing at least 30% of the composition

(b) a radical photoinitiator, the individual components of the photoinitiator being present in less than 6% by wt

wherein the composition further comprises a Lewis acid compound, the Lewis acid having a strenght of at least about 12.

EP 1 142 912 A1

## Description

The invention relates to radiation curable compositions comprising a radiation curable oligomer, a radiation curable diluent, and a radical generating photoinitiator. Such radiation curable compositions are well known in the art.
Radiation curable composition are commonly used as protective coatings or as adhesives. Important characteristics of these compositions are the rate of cure, and the physical characteristics of the cured composition such as e.g. pendulum hardness. The cure rate for a certain composition can be increased by increasing the amount of photoinitiator. This however has certain drawbacks. Generally, photoinitiators are expensive and these compounds yield extractable residues in the cured coating. Hence, increasing the amount of photoinitiator often is not desirable.
It is an object of the present invention to find radiation curable compositions with a radical photoinitiator system that is more effective than common photoinitiator systems.
It is a further object of the present invention to find a method of increasing the cure speed of common photoinitiators. It is yet a further object of the invention to find radiation curable compositions having improved pendulum hardness.
One or more of the above objects are obtained by the composition of the present invention comprising

(a) at least a radiation curable component consisting of at least a radiation curable oligomer and a radiation curable diluent, at least 10% of this component having a functionality of 2 or more this component representing at least 30% by wt of the composition
(b) a radical photoinitiator, the individual components of the photoinitiator being present in less than 6% by wt of the total composition

wherein the composition further comprises a Lewis acid compound, the Lewis acid having a strenght of at least about 12.
The method of the present invention is a method for increasing the cure speed of radiation curable compositions comprising at least one reactive diluent and at least one radical generating photoinitiator by adding a Lewis acid to the composition, the Lewis acid ion having a hardness of at least about 12.
The present invention relates to the use of Lewis acid ions for increasing the cure speed of radical polymerisable radiation curable compositions by having 1-30% of Lewis acid ion present relative to the radical generating photoinitiator in a radiation curable composition.

### Detailed description of the invention

The improvement found by present inventors is applicable in many radiation curable compositions, but is in particular suitable in fiber optic technology, adhesives and coatings for optical readable disks, hard coatings and stereolithography, as these fields of technology require high cure speed and/or high light sensitivity, and/or high hardness.
It has now been found by the present invention that Lewis acids in which the ion has a certain hardness have substantial effect on the cure speed and on the hardness of the coating. The influence on the cure speed is apparent with ions having a hardness of about 12 or more. It is however preferred to use ions with a hardness of about 20 or more. The operational definition of hardness of a Lewis acid ion is described by R.G. Pearson J. Chem. Educ. vol. 64 p. 561-567 (1987).
Lewis acids with low hardness are e.g. $Zn^{2+}$ (10.9) or $N^{+}$ (7.6). These ions do not influence the cure speed or hardness by themselves. However, it has been unexpectedly found that the presence of both a Lewis acid with a strenght of about 12 or more in combination with an acid with a strenght of about 11 or lower gives a synergistic increase in cure speed and hardness of the coating.
The Lewis acid with a hardness of about 12 or more is effective in low amounts. Preferably an effective amount as to increase the cure speed by 10% or more, or more preferably by 20% or more is used in the composition. The Lewis acid generally is effective in amounts between 0.01-10 wt.%. Preferred amounts are about 0.02 wt.% or more in particular 0.05 or higher and of about 2 wt.% or lower in particular of about 0.4 wt.% or lower. Generally, it is preferred to use the Lewis acid in an amount that is about 1-30% of the amount of the radical generating photoinitiator, more preferably in about 2-10%.
Lewis acids are known in the art, and all Lewis acids with the required hardness are useful in the present invention. Examples of Lewis acids suitable in the present invention are $Li^{+}$ (35.1), $Na^{+}$ (21.0), $K^{+}$ (13.6), $Ti^{4+}$ (28), $Al^{3+}$ (45), $Zr^{4+}$ (23), $Sn^{2+}$ (15.9)
The Lewis acid ion should be dissolved in the radiation curable composition in order to be effective. Hence, it is preferred to use a Lewis acid compound that is soluble in the composition, or that is disolved by a co-compound. Co-compounds are e.g. crown ethers or salts of soft-Lewis acids. Suitable compounds of Lewis acids are alkoxy salts of Lewis acid ions in which the alkoxy group has 1-20 carbon atoms. Other suitable compounds are complexes of Lewis acids with e.g. acetylacetonate groups, acetoacetate, or cyclopentadienyl groups or derivatives therefrom.

Metal compounds with cyclopentadienyl groups are also known as metallocenes. Metallocenes are also known as photoinitiators by themselves. The metallocenes generally are less effective photoinitiators than wholly organic type I photoinitiators. However, the use of small amounts of metallocenes with type I or type II photoinitiators increases the cure speed substantially because of the fact that the metal ion is a Lewis acid. However, metallocenes are less preferred because the cyclopentadienyl groups tend to be light sensitive after cure of the composition, causing decreased stability under aging conditions of the coating.

Combined use of metallocenes and wholly organic radical photoinitiators is described in EP-A-318893, WO 9116387 and WO 9838260. However, none of these disclosures describe the effect on cure speed by the Lewis acid characteristic of the metal ion, nor describe these publications the specific radiation curable compositions of the present invention.

Specific examples of suitable Lewis acid compounds are LiBr, NaBr, combined with 18 crown 6, $Ti(OBu)_4$, $Zr(OBu)_4$, $Al(OiPr)_3$, $LiCF_3CO_2$, $Cp_2ZrCl_2$, $Sn(Bu)_2(Laurate)_2$ and the like.

The cure rate and/or hardnesss can be further improved by the combined use of a hard and a soft Lewis acid. As a Lewis acid with a hardness of about 11 or lower in particular ammonium ions are suitable. Tetraalkylammonium in which the alkyl has 1-30 carbon atoms is preferred. Other suitable Lewis acids with low strenght are e.g. $Zn^{2+}$, (Zn diacrylate; $ZnCl_2$, $ZnBr_2$).

This second Lewis acid is used in amounts between 0.01-5 wt.%, preferably between 0.03-9 wt.%

The radiation curable composition of the present invention preferably is substantially solvent free. This means that the composition as stored and/or applied does contain less than 5 wt%, preferably less than 2 wt% organic solvent that is not coreactive in polymerisation reactions. These solvents have to or will evaporate before, during or after cure. In a particular preferred embodiment, the amount of non reactive solvent is less than 0.5 wt%.

The radiation curable composition preferably has more than 90% by wt radical curable components.

In another preferred embodiment, the composition is a hybrid which means that the composition further comprises a cationic curable component and a photo sensitive cationic initiator.

The radiation curable composition consists of a radiation curable oligomer and a radiation curable diluent. Each of the components may be mono or polyfunctional, poly meaning 2 or more functional. Generally, the functionality of the radiation curable components is 12 or lower. Preferred functionality for at least one of the components is 2-4.

The terms diluent and oligomer are used in this specification to denote a compound with lower, respectively, higher viscosity. The oligomer generally will have a molecular weight of about 400 or higher and an average functionality of about 1.2 or higher, preferably an average functionality of about 1.8-4.

The reactive diluent has a viscosity that is lower than the viscosity of the oligomer. In case an oligomer is used with high viscosity, the diluent may have a molecular weight up to about 700.

The present invention can be used in fiber optic coating materials, coating meaning inner or outer primary coating, inks, matrix, bundling materials and the like.

Generally, optical fiber coating materials comprise as an oligomer a urethane acrylate oligomer, comprising an acrylate group, urethane groups and a backbone. The backbone is derived from a polyol which has been reacted with a diisocyanate and hydroxyalkylacrylate.

Examples of suitable polyols are polyether polyols, polyester polyols, polycarbonate polyols, polycaprolactone polyols, acrylic polyols, and other polyols. These polyols may be used either individually or in combinations of two or more. There are no specific limitations to the manner of polymerization of the structural units in these polyols. Any of random polymerization, block polymerization, or graft polymerization is acceptable.

Given as examples of the polyether polyols are polyethylene glycol, polypropylene glycol, polypropylene glycol-ethyleneglycol copolymer, polytetramethylene glycol, polyhexamethylene glycol, polyheptamethylene glycol, polydecamethylene glycol, and polyether diols obtained by ring-opening copolymerization of two or more ion-polymerizable cyclic compounds. Here, given as examples of the ion-polymerizable cyclic compounds are cyclic ethers such as ethylene oxide, isobutene oxide, tetrahydrofuran, 2-methyltetrahydrofuran, 3-methyltetrahydrofuran, dioxane, trioxane, tetraoxane, cyclohexene oxide, styrene oxide, epichlorohydrin, isoprene monoxide, vinyl oxetane, vinyl tetrahydrofuran, vinyl cyclohexene oxide, phenyl glycidyl ether, butyl glycidyl ether, and glycidyl benzoate. Specific examples of combinations of two or more ion-polymerizable cyclic compounds include combinations for producing a binary copolymer such as tetrahydrofuran and 2-methyltetrahydrofuran, tetrahydrofuran and 3-methyltetrahydrofuran, and tetrahydrofuran and ethylene oxide; and combinations for producing a ternary copolymer such as a combination of tetrahydrofuran, 2-methyltetrahydrofuran, and ethylene oxide, a combination of tetrahydrofuran, butene-1-oxide, and ethylene oxide, and the like. The ring-opening copolymers of these ion-polymerizable cyclic compounds may be either random copolymers or block copolymers.

Included in these polyether polyols are products commercially available under the trademarks, for example, PTMG1000, PTMG2000 (manufactured by Mitsubishi Chemical Corp.), PEG#1000 (manufactured by Nippon Oil and Fats Co., Ltd.), PTG650 (SN), PTG1000 (SN), PTG2000 (SN), PTG3000, PTGL1000, PTGL2000 (manufactured by Hodogaya Chemical Co., Ltd.), PEG400, PEG600, PEG1000, PEG1500, PEG2000, PEG4000, PEG6000 (manufactured by Daiichi Kogyo Seiyaku Co., Ltd.) and Pluronics (by BASF).

Polyester diols obtained by reacting a polyhydric alcohol and a polybasic acid are given as examples of the polyester polyols. As examples of the polyhydric alcohol, ethylene glycol, polyethylene glycol, tetramethylene glycol, polytetramethylene glycol, 1,6-hexanediol, 3-methyl-1,5-pentanediol, 1,9-nonanediol, 2-methyl-1,8-octanediol, and the like can be given. As examples of the polybasic acid, phthalic acid, dimer acid, isophthalic acid, terephthalic acid, maleic acid, fumaric acid, adipic acid, sebasic acid, and the like can be given.

These polyester polyol compounds are commercially available under the trademarks such as MPD/IPA500, MPD/IPA1000, MPD/IPA2000, MPD/TPA500, MPD/TPA1000, MPD/TPA2000, Kurapol A-1010, A-2010, PNA-2000, PNOA-1010, and PNOA-2010 (manufactured by Kuraray Co., Ltd.).

As examples of the polycarbonate polyols, polycarbonate of polytetrahydrofuran, poly(hexanediol carbonate), poly(nonanediol carbonate), poly(3-methyl-1,5-pentamethylene carbonate), and the like can be given.

As commercially available products of these polycarbonate polyols, DN-980, DN-981 (manufactured by Nippon Polyurethane Industry Co., Ltd.), Priplast 3196, 3190, 2033 (manufactured by Unichema), PNOC-2000, PNOC-1000 (manufactured by Kuraray Co., Ltd.), PLACCEL CD220, CD210, CD208, CD205 (manufactured by Daicel Chemical Industries, Ltd.), PC-THF-CD (manufactured by BASF), and the like can be given.

Polycaprolactone diols obtained by reacting e-caprolactone and a diol compound are given as examples of the polycaprolactone polyols having a melting point of 0°C or higher. Here, given as examples of the diol compound are ethylene glycol, polyethylene glycol, polypropylene glycol, polypropylene glycol, tetramethylene glycol, polytetramethylene glycol, 1,2-polybutylene glycol, 1,6-hexanediol, neopentyl glycol, 1,4-cyclohexanedimethanol, 1,4-butanediol, and the like.

Commercially available products of these polycaprolactone polyols include PLACCEL 240, 230, 230ST, 220, 220ST, 220NP1, 212, 210, 220N, 210N, L230AL, L220AL, L220PL, L220PM, L212AL (all manufactured by Daicel Chemical Industries, Ltd.), Rauccarb 107 (by Enichem), and the like.

As examples of other polyols ethylene glycol, 1,4-butanediol, 1,5-pentanediol, 1,6-hexanediol, polyoxyethylene bisphenol A ether, polyoxypropylene bisphenol A ether, polyoxyethylene bisphenol F ether, polyoxypropylene bisphenol F ether, and the like can be given.

As these other polyols, those having a alkylene oxide structure in the molecule, in particular polyether polyols, are preferred. Specifically, polyols containing polytetramethylene glycol and copolymer glycols of butyleneoxide and ethyleneoxide are particularly preferred.

The reduced number average molecular weight derived from the hydroxyl number of these polyols is usually from 50 to 15,000, and preferably from 1,000 to 8,000.

Given as examples of the polyisocyanate used for the oligomer are 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, bis(2-isocyanatethyl) fumarate, 6-isopropyl-1,3-phenyl diisocyanate, 4-diphenylpropane diisocyanate, hydrogenated diphenylmethane diisocyanate, hydrogenated xylylene diisocyanate, tetramethyl xylylene diisocyanate, lysine isocyanate, and the like. These polyisocyanate compounds may be used either individually or in combinations of two or more.

Examples of the hydroxyl group-containing (meth)acrylate used in the oligomer, include, (meth)acrylates derived from (meth)acrylic acid and epoxy and (meth)acrylates comprising alkylene oxides, more in particular, 2-hydroxyethyl(meth)acrylate, 2-hydroxypropylacrylate and 2-hydroxy-3-oxyphenyl (meth)acrylate. Acrylate functional groups are preferred over methacrylates.

The ratio of polyol, polyisocyanate, and hydroxyl group-containing (meth)acrylate used for preparing the urethane (meth)acrylate is determined so that 1.1 to 3 equivalents of an isocyanate group included in the polyisocyanate and 0.1 to 1.5 equivalents of a hydroxyl group included in the hydroxyl group-containing (meth)acrylate are used for one equivalent of the hydroxyl group included in the glycol.

In the reaction of these three components, a urethanization catalyst such as copper naphthenate, cobalt naphthenate, zinc naphthenate, di-n-butyl tin dilaurate, triethylamine, and triethylenediamine-2-methyltriethyleneamine, is usually used in an amount from 0.01 to 1 wt% of the total amount of the reactant. The reaction is carried out at a temperature from 10 to 90°C, and preferably from 30 to 80°C.

The number average molecular weight of the urethane (meth)acrylate used in the composition of the present invention is preferably in the range from 1200 to 20,000, and more preferably from 2,200 to 10,000. If the number average molecular weight of the urethane (meth)acrylate is less than 100, the resin composition tends to solidify; on the other hand, if the number average molecular weight is larger than 20,000, the viscosity of the composition becomes high, making handling of the composition difficult.

The urethane (meth)acrylate is used in an amount from 10 to 90 wt%, and preferably from 20 to 80 wt%, of the total amount of the resin composition. When the composition is used as a coating material for optical fibers, the

range from 20 to 80 wt% is particularly preferable to ensure excellent coatability, as well as superior flexibility and long-term reliability of the cured coating.

Other oligomers that can be used include polyester (meth)acrylate, epoxy (meth)acrylate, polyamide (meth) acrylate, siloxane polymer having a (meth)acryloyloxy group, a reactive polymer obtained by reacting (meth)acrylic acid and a copolymer of glycidyl methacrylate and other polymerizable monomers, and the like. Particularly preferred are bisphenol A based acrylate oligomers such as alkoxylated bisphenol-A-diacrylate and diglycidyl-bisphenol-A-diacrylate.

Suitable reactive diluents are examplified herein below.

Polymerizable vinyl monomers such as polymerizable monofunctional vinyl monomers containing one polymerizable vinyl group in the molecule and polymerizable polyfunctional vinyl monomers containing two or more polymerizable vinyl groups in the molecule may be added to the liquid curable resin composition of the present invention.

Given as specific examples of the polymerizable monofunctional vinyl monomers are vinyl monomers such as N-vinylpyrrolidone, N-vinylcaprolactam, vinylimidazole, and vinylpyridine; (meth)acrylates containing an alicyclic structure such as isobornyl (meth)acrylate, bornyl (meth)acrylate, tricyclodecanyl (meth)acrylate, dicyclopentanyl (meth)acrylate, dicyclopentenyl (meth)acrylate, and cyclohexyl (meth)acrylate; benzyl (meth)acrylate, 4-butylcyclohexyl (meth)acrylate, acryloylmorpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth) acrylate, butoxyethyl (meth)acrylate, ethoxydiethylene glycol (meth)acrylate, benzyl(meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypropylene glycol (meth)acrylate, diacetone(meth)acrylamide, isobutoxymethyl(meth)acrylamide, N,N-dimethyl(meth)acrylamide, t-octyl(meth)acrylamide, dimethylaminoethyl (meth)acrylate, diethylaminoethyl (meth)acrylate, 7-amino-3,7-dimethyloctyl (meth)acrylate, N,N-diethyl(meth)acrylamide, N,N-dimethylaminopropyl(meth)acrylamide, hydroxy butyl vinyl ether, lauryl vinyl ether, cetyl vinyl ether, 2-ethylhexyl vinyl ether, acrylate monomers shown by the following formulas (1) to (3),

(1)

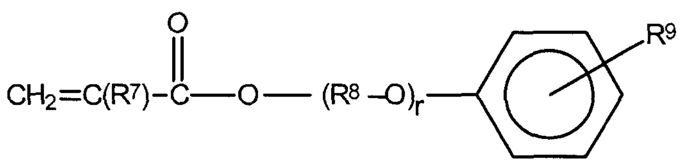

wherein $R^7$ is a hydrogen atom or a methyl group, $R^8$ is an alkylene group having 2-6, and preferably 2-4 carbon atoms, $R^9$ is a hydrogen atom or an organic group containing 1-12 carbon atoms or an aromatic ring, and r is an integer from 0 to 12, and preferably from 1 to 8,

(2)

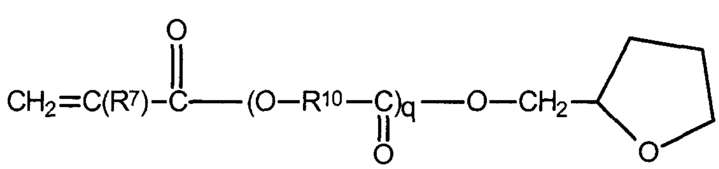

wherein $R^7$ is the same as defined above, $R^{10}$ is an alkylene group having 2-8, and preferably 2-5 carbon atoms, and q is an integer from 1 to 8, and preferably from 1 to 4,

(3)

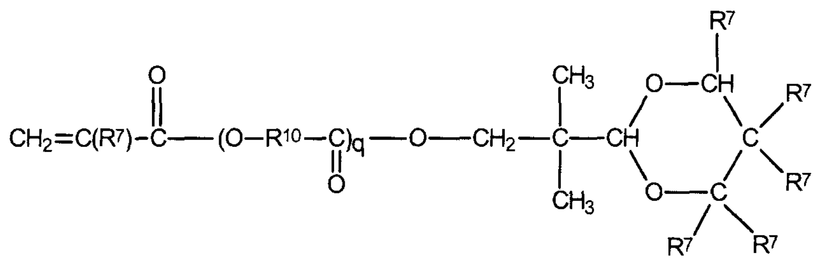

wherein $R^7$, $R^{10}$, and q are the same as defined above.

As examples of commercially available products of the polymerizable monofunctional vinyl monomers, Aronix M102, M110, M111, M113, M117 (manufactured by Toagosei Co., Ltd.), LA, IBXA, Viscoat #190, #192, #2000 (manufactured by Osaka Organic Chemical Industry Co., Ltd.), Light Acrylate EC-A, PO-A, NP-4EA, NP-8EA, M-600A, HOA-MPL (manufactured by Kyoeisha Chemical Co., Ltd.), KAYARAD TC110S, R629, R644 (manufactured by Nippon Kayaku Co., Ltd.), and the like can be given.

Given as examples of the polymerizable polyfunctional vinyl monomers are the following acrylate compounds: trimethylolpropane tri(meth)acrylate, pentaerythritol tri(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth) acrylate, neopentyl glycol di(meth)acrylate, trimethylolpropanetrioxyethyl (meth)acrylate, tris(2-hydroxyethyl)isocyanurate tri(meth)acrylate, tris(2-hydroxyethyl)isocyanurate di(meth)acrylate, bis(hydroxymethyl)tricyclodecane di(meth) acrylate, di(meth)acrylate of a diol which is an addion compound of ethylene oxide or propylene oxide to bisphenol A, di(meth)acrylate of a diol which is an addition compound of ethylene oxide or propylene oxide to hydrogenated bisphenol A, epoxy(meth)acrylate obtained by the addition of (meth)acrylate to diglycidyl ether of bisphenol A, diacrylate of polyoxyalkylene bisphenol A, and triethylene glycol divinyl ether.

Examples of commercially available products of the polymerizable polyfunctional vinyl monomers include Yupimer UV SA1002, SA2007 (manufactured by Mitsubishi Chemical Corp.), Viscoat #195, #230, #215, #260, #335HP, #295, #300, #700 (manufactured by Osaka Organic Chemical Industry Co., Ltd.), Light Acrylate 4EG-A, 9EG-A, NP-A, DCP-A, BP-4EA, BP-4PA, PE-3A, PE-4A, DPE-6A (manufactured by Kyoeisha Chemical Co., Ltd.), KAYARAD R-604, DPCA-20,-30,-60,-120, HX-620, D-310, D-330 (manufactured by Nippon Kayaku Co., Ltd.), Aronix M-208, M-210, M-215, M-220, M-240, M-305, M-309, M-315, M-325 (manufactured by Toagosei Co., Ltd.), and the like.

These polymerizable vinyl monomers are used in an amount from 10 to 70 wt%, and preferably from 15 to 60 wt%, of the total amount of the resin composition. If the amount is less than 10 wt%, the viscosity of the composition is so high that coatability is impaired. The amount exceeding 70 wt% may result in not only an increased cure shrinkage, but also insufficient toughness of the cured products.

The liquid curable resin composition of the present invention is cured by radiation, and a photo-polymerization initiator is used. In addition, a photosensitizer is added as required. Given as examples of the photo-polymerization initiator are 1-hydroxycyclohexylphenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio) phenyl]-2-morpholino-propan-1-one, 2,4,6-trimethylbenzoyldiphenylphosphine oxide, bis-(2,6-dimethoxybenzoyl)-2,4,4-trimethylpentylphosphine oxide, bis-(2,4,6-trimethylbenzoyl)-phenylphosphine oxide and the like.

Examples of commercially available products of the photo-polymerization initiator include IRGACURE 184, 369, 651, 500, 907, CGI1700, 1750, 1850, 819, CG24-61, Darocur 1116, 1173 (manufactured by Ciba Specialty Chemicals Co., Ltd.), Lucirin LR8728 (manufactured by BASF), Ubecryl P36 (manufactured by UCB), and the like.

Given as examples of the photosensitizer are triethylamine, diethylamine, N-methyldiethanoleamine, ethanolamine, 4-dimethylaminobenzoic acid, methyl 4-dimethylaminobenzoate, ethyl 4-dimethylaminobenzoate, isoamyl 4-dimethylaminobenzoate, and the like. As commercially available products of the photosensitizer, for example, Ubecryl P102, 103, 104, and 105 (manufactured by UCB) are given.

The amount of the polymerization initiator used here is in the range from 0.1 to 10 wt%, and preferably from 0.5 to 7 wt%, of the total amount of the components for the resin composition.

Beside the above-described components, other curable oligomers or polymers may be added to the liquid curable resin composition of the present invention to the extent that the characteristics of the liquid curable resin

composition are not adversely affected.

An amine compound can be added to the liquid curable resin composition of the present invention to prevent generation of hydrogen gas, which causes transmission loss in the optical fibers. As examples of the amine which can be used here, diallylamine, diisopropylamine, diethylamine, diethylhexylamine, and the like can be given.

In addition to the above-described components, various additives such as antioxidants, UV absorbers, light stabilizers, silane coupling agents, coating surface improvers, heat polymerization inhibitors, leveling agents, surfactants, colorants, preservatives, plasticizers, lubricants, solvents, fillers, aging preventives, and wettability improvers can be used in the liquid curable resin composition of the present invention, as required. Examples of antioxidants include Irganox1010, 1035, 1076, 1222 (manufactured by Ciba Specialty Chemicals Co., Ltd.), Antigene P, 3C, FR, Sumilizer GA-80 (manufactured by Sumitomo Chemical Industries Co., Ltd.), and the like; examples of UV absorbers include Tinuvin P, 234, 320, 326, 327, 328, 329, 213 (manufactured by Ciba Specialty Chemicals Co., Ltd.), Seesorb 102, 103, 110, 501, 202, 712, 704 (manufactured by Sypro Chemical Co., Ltd.), and the like; examples of light stabilizers include Tinuvin 292, 144, 622LD (manufactured by Ciba Specialty Chemicals Co., Ltd.), Sanol LS770 (manufactured by Sankyo Co., Ltd.), Sumisorb TM-061 (manufactured by Sumitomo Chemical Industries Co., Ltd.), and the like; examples of silane coupling agents include aminopropyltriethoxysilane, mercaptopropyltrimethoxysilane, and methacryloxypropyltrimethoxysilane, and commercially available products such as SH6062, SH6030 (manufactured by Toray-Dow Corning Silicone Co., Ltd.), and KBE903, KBE603, KBE403 (manufactured by Shin-Etsu Chemical Co., Ltd.); examples of coating surface improvers include silicone additives such as dimethylsiloxane polyether and commercially available products such as DC-57, DC-190 (manufactured by Dow-Corning), SH-28PA, SH-29PA, SH-30PA, SH-190 (manufactured by Toray-Dow Corning Silicone Co., Ltd.), KF351, KF352, KF353, KF354 (manufactured by Shin-Etsu Chemical Co., Ltd.), and L-700, L-7002, L-7500, FK-024-90 (manufactured by Nippon Unicar Co., Ltd.).

The viscosity of the liquid curable resin composition of the present invention is usually in the range from 200 to 20,000 cP, and preferably from 2,000 to 15,000.

The radiation-curable compositions of the present invention may be formulated such that the composition after cure has a modulus as low as 0.1 MPa and as high as 2,000 MPa or more. Those having a modulus in the lower range, for instance, from 0.1 to 10 MPa, preferably 0.1 to 5 MPa, and more preferably 0.5 to less than 3 MPa are typically suitable for inner primary coatings for fiber optics. In contrast, suitable compositions for outer primary coatings, inks and matrix materials generally have a modulus of above 50 MPa, with outer primary coatings tending to have a modulus more particularly above 100 up to 1,000 MPa and matrix materials tending to be more particularly between about 50 MPa to about 200 MPa for soft matrix materials, and between 200 to about 1500 MPa for hard matrix materials. The radiation-curable composition of the present invention may be formulated such that the composition after cure has a Tg between -70°C and 30°C. The Tg is measured as the peak tan-delta in a DMA curve at 2.5% elongation.

Elongation and tensile strength of these materials can also be optimized depending on the design criteria for a particular use. For cured coatings formed from radiation-curable compositions formulated for use as inner primary coatings on optical fibers, the elongation-at-break is typically greater than 80 %, more preferably the elongation-at-break is at least 110%, more preferably at least 150% but not typically higher than 400%. For coatings formulated for outer primary coatings, inks and matrix materials the elongation-at-break is typically between 10% and 100%, and preferably higher than 30%.

The glass transition temperature (Tg), measured as the peak tan-delta determined by dynamic mechanical analysis (DMA), can be optimized depending on the particulars of the application. The glass transition temperature may be from 10°C down to -70°C or lower, more preferably lower than 0°C for compositions formulated for use as inner primary coatings and 10°C to 120°C or higher, more preferably above 30°C, for compositions designed for use as outer primary coatings, inks and matrix materials.

The compositions of the present invention will preferably have a cure speed of 1.0 $J/cm^2$ of less (at 95% of maximum attainable modulus). For an outer primary coating, ink or matrix material, cure speed is preferably about 0.5 $J/cm^2$ or less (at 95% of maximum attainable modulus), and more preferably, about 0.3 $J/cm^2$ or less, and even more preferably, about 0.2 $J/cm^2$ or less.

The cured products obtained by the polymerization of the resin composition of the present invention are particularly suitable for use as a coating material for optical fibers, optical fiber ribbons, and the like including primary coatings, secondary coatings, colored secondary coatings, inks, matrix materials and bundling materials.

The compositions of the present invention can very well be used as DVD adhesives or lackers on CD/DVD disks.

For an adhesive coating, density at 25°C is about 1.02 g/ml. The adhesive composition preferably has a viscosity of about 100 to about 30,000 mPas at 25°C. Elongation is preferably at least 2% or more. The shrinkage upon cure should be ≤ 7%, with respect to the density of cured material. Bond strength is preferably rated about 4 to about 5. Shear strength is preferably about 10 lbs to about 50 lbs. Cured adhesive bonds are preferably stable under exposure to about 85°C at about 85% relative humidity for at least 96 hrs.

The compounds forming the radiation curable adhesive compositions are combined to form a, preferably,

thixotropic mixture and coated on, for example, one surface of each of two polycarbonate substrates forming the DVD, which surfaces are already coated with an aluminum, gold or other layer encoded with audio, video or other information and preferably protected by a UV curable lacquer. The adhesive is coated on the substrates by screen printing or other suitable method known in the art. The adhesive on the substrates is then cured with ultraviolet radiation preferably at a dose of about 0.2-1.0 J/ $cm^2$, for example about 0.4 $J/cm^2$. Radiation-cure may be effected using a fusion lamp equipped with a "H" bulb or a "D" bulb from Fusion Curing Systems, Rockville, Maryland, or the equivalent thereof, in an air atmosphere. The cured adhesive coated substrates are superimposed on each other with the adhesive bonding the substrate layers together, thereby forming a single DVD having one or preferably two layers of encoded audio or video information which may be read in a DVD player. Substrate layers which may be bonded by the invention in various combinations comprise plastics, metallics and ceramics. The adhesive composition are preferably applied to the disc layers by screen printing.

The production of and useful characteristics for optical disc adhesives are discussed in, for example, U.S. Patent Nos.4,861,637, 4,906,675 5,360,652, 5,663,211, 5,227,213 and 5,213,947.

In one embodiment of the invention, the compositions can comprise at least one radiation-curable acrylate oligomer, at least one radiation-curable reactive diluent, at least one photoinitiator, as described above for optical glass fiber coatings. In another embodiment, the composition further comprises at least one epoxy compound, optionally at least one diol and optional additives. The weight ratio of the cationic component to the radically curable component of the composition may be from about 99:1 to about 20:80, preferably from about 80:20 to as low as about 40:60, and more preferably is from about 60:40 to about 50:50. Additives will bring the total weight value to 100% in each case.

The composition may be tailored to maximize the adhesiveness, reduce the viscosity, shorten cure speed, and the like of the cured material. For example, radical polymerizable monomers and optionally silane compounds, may be added at varying effective concentrations to achieve improved viscosity and adhesion, respectively. By altering the ratios of components, other desirable properties may be promoted, such as high optical transparency, hardness, chemical resistance, and abrasion resistance.

If a hybrid composition is used, the composition contains at least one cationic curable epoxy resin, preferably present in an amount from about 10 wt.% to about 99 wt.%. Suitable epoxy resins include bisphenol-A, cycloaliphatic epoxides, bisphenol-F, and mixtures thereof. Preferred epoxy resins include mixed cycloaliphatic epoxides, bis-(3,4-epoxycyclohexyl) adipate, bisphenol-A epoxide and bisphenol-F epoxide. Bisphenol-A epoxide is known to give good surface cure. Excellent through cure is achievable with bisphenol-F epoxide, and is most preferred.

The composition, preferably comprises a polyol, which can be a low molecular compound (with e.g. an Mw of less than 500) and 2-6 hydroxy groups, preferably 2-3 hydroxy groups. Alcohols and polyols can behave as chain transfer agents and as co-curing agents with epoxides, improving cure speed of cationic formulations. Suitable polyols include ε-caprolactone triol crosslinking agents of viscosities at 55°C ranging from 2250 cP to 2700 cP. Other examples of suitable polyols include ethyleneglycol, diethyleneglycol, 1,2-propanediol, 1,3-propanediol, 1,2-butanediol, 1,4-butanediol, pentaeritritol, trimethylolpropane and the like. The amount of the polyol - if present - preferably is 1 to 70 wt%, preferably 2-50 wt% and most preferred 3-20 wt%. Low molecular polyols and in particular diols having 1-8 carbon atoms are preferred because these aid in achieving a low viscosity. Ethyleneglycol is most preferred.

Hybrid compositions often are used in stereolithography, or 3D-modelling. The cationic curable component generally has a molecular weight of between 120 and 10,000, preferably between 150 and 5,000, more preferably between 180 and 2,000.

Examples of such a compound include epoxy compounds, oxetane compounds, oxolane compounds, cyclic acetal compounds, cyclic lactone compounds, thiirane compounds, thiethane compounds, vinyl ether compounds, spiro orthoester compounds obtained by the reaction of an epoxy compound with at least one lactone compound, ethylenically unsaturated compound, cyclic ether compound, cyclic thioether compound, vinyl compound, and/or the like.

Preferred cationically polymerizable organic compounds include glycidyl ether compounds, including di-, tri- and polyglycidyl ether compounds, and alicyclic ether compounds including those comprising residue of carboxylic acids such as, for example, alkylcarboxylic acid residual groups, alkylcycloalkylcarboxylic acid residual groups and dialkyl dicarboxylic acid residual groups. Suitable epoxy compounds that can be used include, for example, bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexyl-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3,4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, glycerol triglycidyl ether,

trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidated soybean oil, epoxybutylstearic acid, epoxyoctylstearic acid, epoxidated linseed oil, epoxidated polybutadiene, and the like can be given.

Examples of other cationically polymerizable organic compounds which can be used include oxetanes such as trimethylene oxide, 3,3-dimethyloxetane, 3,3-dichloromethyloxetane, 3-ethyl-3-phenoxymethyloxetane, and bis (3-ethyl-3-methyloxy)butane; oxolanes such as tetrahydrofuran and 2,3-dimethyltetrahydrofuran; cyclic acetals such as trioxane, 1,3-dioxolane, and 1,3,6-trioxanecyclooctane; cyclic lactones such as β-propyolactone and ε-caprolactone; thiiranes such as ethylene sulfide, 1,2-propylene sulfide, and thioepichlorohydrin; thiethanes such as 3,3-dimethylthiethane; vinyl ethers such as ethylene glycol divinyl ether, triethylene glycol divinyl ether, trimethylolpropane trivinyl ether; spiro orthoesters obtained by the reaction of an epoxy compound and lactone; ethylenically unsaturated compounds such as vinylcyclohexane, isobutylene, and polybutadiene; derivatives of the above compounds; and the like.

Of these cationically polymerizable organic compounds, bisphenol A diglycidyl ether, bisphenol F diglycidyl ether, hydrogenated bisphenol A diglycidyl ether, hydrogenated bisphenol F diglycidyl ether, 3,4-epoxycyclohexylmethyl-3',4'-epoxycyclohexanecarboxylate, bis(3,4-epoxycyclohexylmethyl)adipate, 1,4-butanediol diglycidyl ether, 1,6-hexanediol diglycidyl ether, glycerol triglycidyl ether, trimethylolpropane triglycidyl ether, neopentyl glycol diglycidyl ether, polyethylene glycol diglycidyl ether, and polypropylene glycol diglycidyl ether are preferable.

As even more preferred cationically polymerizable organic compounds epoxy compounds having two or more alicyclic epoxy groups in a molecule such as 3,4-epoxycyclohexylmethyl-3',4'-epoxycyclohexanecarboxylate, and bis (3,4-epoxycyclohexylmethyl)adipate can be given.

As examples of commercially available products of the cationically polymerizable organic compounds suitably used, UVR-6100, UVR-6105, UVR-6110, UVR-6128, UVR-6200, UVR-6216 (manufactured by Union Carbide Corp.), Celoxide 2021, Celoxide 2021P, Celoxide 2081, Celoxide 2083, Celoxide 2085, Celoxide 2000, Celoxide 3000, Glycidole, AOEX 24, Cyclomer A200, Cyclomer M100, Epolead GT-300, Epolead GT-301, Epolead GT-302, Epolead GT-400, Epolead 401, Epolead 403 (manufactured by Daicel Chemical Industries, Ltd.), Epicoat 828, Epicoat 812, Epicoat 1031, Epicoat 872, Epicoat CT508 (manufactured by Yuka-Shell Epoxy K.K.), KRM-2100, KRM-2110, KRM-2199, KRM-2400, KRM-2410, KRM-2408, KRM-2490, KRM-2200, KRM-2720, KRM-2750 (manufactured by Asahi Denka Kogyo Co., Ltd.), Rapi-Cure DVE-3, CHVE, PEPC (manufactured by ISP), VECTOMER 2010, 2020, 4010, 4020 (manufactured by AlliedSignal), and the like can be given.

The proportion of the cationic curable component used in the photocurable resin composition of the present invention is usually, relative to the total compositon, 20-85 wt%, preferably 30-80 wt%, and more preferably 40-75 wt%. If the proportion is too small, three-dimensional objects formed from the resin composition may exhibit insufficient dimensional accuracy and deformation with time may be caused. On the other hand, if the proportion is too large, the resin composition may exhibit inferior photocurability which may result in inefficient fabrication.

Hybrid resin compositions as for example used in DVD adhesives or 3D modelling preferably comprise a cationic photoinitiator.

The cationic photopolymerization initiator of the photocurable resin composition of the present invention evolves a material which initiates cationically polymerization by exposure to energy rays such as radiation. Here, energy rays such as radiation include visible rays, ultraviolet rays, infrared rays, X-ray, α-rays, β-rays, γ-rays, and the like. As examples of preferable compounds used as the component (B), onium salts represented by formula (1) can be given:

$$[R^1{}_aR^2{}_bR^3{}_cR^4{}_dW]^{+m}[MX_{n+m}]^{-m} \qquad (I)$$

wherein a cation is an onium ion; W represents S, Se, Te, P, As, Sb, Bi, O, I, Br, Cl, or -N≡N; $R^1$, $R^2$, $R^3$, and $R^4$ independently represent organic groups; a, b, c, and d independently represent integers from 0-3, provided that the total of (a + b + c + d) is equal to the of valence of W; M is a metal or a metalloid which constitutes a center atom of the halide complex $[MX_{n+m}]$, for example, M represents B, P, As, Sb, Fe, Sn, Bi, Al, Ca, In, Ti, Zn, Sc, V, Cr, Mn, Co; X represents a halogen atom such as F, Cl, and Br; m represents a positive charge of a halide complex ion; and n represents a valence of M. This onium salt evolves Lewis acids by irradiation.

As specific examples of an anion $[MX_{n+m}]$ in the above formula (1), tetrafluoroborate ($BF_4^-$), hexafluorophosphate ($PF_6^-$), hexafluoroantimonate ($SbF_6^-$), hexafluoroarsenate ($AsF_6^-$), hexachloroantimonate ($SbCl_6^-$), and the like can be given.

Moreover, onium salts having an anion represented by the formula $[MX_n(OH)^-]$ and onium salts having other

anions such as perchloric acid ion ($ClO_4^-$), trifluoromethane sulfonic acid ion ($CF_3SO_3^-$), fluorosulfonic acid ion ($FSO_3^-$), toluenesulfonic acid ion, trinitrobenzenesulfonic acid anion, trinitrotoluenesulfonic acid anion can also be used.

Of these onium salts, aromatic onium salts are more preferred. Examples of such aromatic onium salts include: aromatic halonium salts disclosed in, for example, Japanese Patent Applications Laid-open No. 151996/1975 and No. 158680/1975, VIA group aromatic onium salts disclosed in, for example, Japanese Patent Applications Laid-open No. 151997/1975, No. 30899/1977, No. 55420/1981, and No. 125105/1980; VA group aromatic onium salts disclosed in, for example, Japanese Patent Application Laid-open No. 158698/1975; oxosulfoxonium salts disclosed in, for example, Japanese Patent Applications Laid-open No. 8428/1981, No. 149402/1981, and No. 192429/1982; aromatic diazonium salts disclosed in, for example, Japanese Patent Application Laid-open No. 17040/1974; thiopyrylium salts disclosed in, for example, U.S. Patent No. 4,139,655; and the like. In addition, iron/allene complex initiators, aluminum complex/photolysis silicon compound initiators, and the like can also be given as examples.

As examples of commercially available products of cationic photopolymerization initiators, UVI-6950, UVI-6970, UVI-6974, UVI-6990 (manufactured by Union Carbide Corp.), Adekaoptomer SP-150, SP-151, SP-170, SP-171 (manufactured by Asahi Denka Kogyo Co., Ltd.), Irgacure 261 (manufactured by Ciba Specialty Chemicals Co., Ltd.), CI-2481, CI-2624, CI-2639, CI-2064 (manufactured by Nippon Soda Co., Ltd.), CD-1010, CD-1011, CD-1012 (manufactured by Sartomer Co., Ltd.), DTS-102, DTS-103, NAT-103, NDS-103, TPS-103, MDS-103, MPI-103, BBI-103 (manufactured by Midori Chemical Co., Ltd.), PCI-061T, PCI-062T, PCI-020T, PCI-022T (manufactured by Nippon Kayaku Co., Ltd.), and the like can be given. Of these, UVI-6970, UVI-6974, Adekaoptomer SP-170, SP-171, CD-1012, and MPI-103 are particularly preferable in view of higher photocuring sensitivity of the resulting resin composition.

These cationic photopolymerization initiators can be used either individually or in combinations of two or more.

The proportion of the cationic initiator used in the photocurable resin composition of the present invention is usually, relative to the total weight of the composition, 0.1-10 wt%, preferably 0.2-5 wt%, and more preferably 0.3-3 wt%.

A further preferred compound in hybrid compositions is a polyol having two or more hydroxyl groups, preferably three or more hydroxyl groups.

The polyol having three or more hydroxyl groups is a component for developing the photo-curability of the resin composition. The polyol provides assistance to the three-dimensional object to prevent deformation over time (i.e., shape stability) and resistance to change in mechanical characteristics over time (i.e., physical property stability). (over time). Preferably, the polyol has three or more, preferably 3-6 hydroxyl groups. If polyols having more than six hydroxyl groups are used, the elongation and toughness of the resulting three-dimensional object tends to be lower.

Preferred examples include polyether polyols having three or more, and preferably from 3 to 6 hydroxyl groups in a molecule. Use of polyether polyols having less than three hydroxyl groups in a molecule (polyether diol) may result in insufficient photocurability of the resin composition and decreased mechanical properties, in particular, low modulus of elasticity of the resulting three-dimensional objects. On the other hand, if polyether polyols having more than six hydroxyl groups in a molecule are used, the resulting three-dimensional objects may exhibit insufficient elongation and decreased moisture resistance.

As examples of the polyol, polyether polyols obtained by modifying polyhydric alcohols having more than three hydroxyl groups such as trimethylolpropane, glycerol, pentaerythritol, sorbitol, sucrose, and quadrol with cyclic ether compounds such as ethylene oxide (EO), propylene oxide (PO), butylene oxide, and tetrahydrofuran can be given. Specific examples include EO-modified trimethylolpropane, PO-modified trimethylolpropane, tetrahydrofuran-modified trimethylolpropane, EO-modified glycerol, PO-modified glycerol, tetrahydrofuran-modified glycerol, EO-modified pentaerythritol, PO-modified pentaerythritol, tetrahydrofuran-modified pentaerythritol, EO-modified sorbitol, PO-modified sorbitol, EO-modified sucrose, PO-modified sucrose, EO-modified sucrose, EO-modified quadrol and the like. Of these, EO-modified trimethylolpropane, PO-modified trimethylolpropane, PO-modified glycerol, PO-modified sorbitol are preferred.

The molecular weight of the polyether polyol is preferably 100-2,000, and more preferably 160-1,000. If the molecular weight of the polyether polyol is too small, form stability and physical stability of three-dimensional objects formed from the resin composition may be insufficient. On the other hand, if the molecular weight of the polyether polyol is too large, increased viscosity of the resin composition may give rise to lower modulus of elasticity of the three-dimensional objects formed by photofabrication.

As examples of commercially available products of polyether polyols, Sunnix TP-400, GP-600, GP-1000, SP-750, GP-250, GP-400, GP-600 (manufactured by Sanyo Chemical Industries, Ltd.), TMP-3 Glycol, PNT-4 Glycol, EDA-P-4, EDA-P-8 (manufactured by Nippon Nyukazai Co., Ltd.), G-300, G-400, G-700, T-400, EDP-450, SP-600, SC-800 (manufactured by Asahi Denka Kogyo Co., Ltd.), and the like can be given.

These polyether polyols can be used either individually or in combinations of two or more.

The proportion of the polyol used in the photocurable resin composition of the present invention is usually, relative to the total composition, 5-35 wt%, preferably 7-30 wt%, and more preferably 10-25 wt%.

The above-described photocurable liquid resin composition of the present invention can be suitably used as a photocurable liquid resin material used in the photofabrication of three-dimensional objects. The three-dimensional

objects can be fabricated from the photocurable resin composition of the present invention by the photofabrication process, wherein energy required for curing is provided for the composition by selective exposure to radiation such as visible rays, ultraviolet rays, and infrared rays.

There are no specific limitations to the means of selectively irradiating the photocurable resin composition. Examples of such means include:

irradiating the composition by scanning with laser beams or focused rays converged by lenses or mirrors; irradiating the composition with unfocused rays via a mask having a phototransmission portion with a specified pattern; and irradiating the composition by using a photoconductive material consisting of bundled multiple optical fibers, wherein the composition is irradiated via specific optical fibers corresponding to the specified pattern of the photo-conductive material. In the above means utilizing a mask, a mask which electrooptically forms a mask image consisting of a phototransmission area and a non-phototransmission area according to a specified pattern by the same theory as that of liquid crystal display can be used. If microfabrication or higher dimensional accuracy is required for objective three-dimensional objects, it is preferable to employ the means comprising scanning with laser beams having a small spot diameter as the means of selectively irradiating the composition.

The irradiated surface of the resin composition in a vessel (for example, scanning plane of focused rays) may be the liquid surface of the resin composition or the surface of the boundary of the resin composition with the wall of the vessel. In this case, the composition can be exposed to radiation either directly or indirectly via the wall of the vessel.

In the above-described photofabrication of three-dimensional objects, after a specified area of the resin composition has been cured, an objective three-dimensional shape is usually fabricated by laminating the cured areas by continuously or gradually moving the irradiation spot (irradiation surface) from the cured area to the uncured area. Here, the irradiation spot can be moved by, for example, moving any one of a light source, the vessel of the resin composition, and the cured area of the resin composition, or additionally providing the resin composition in the vessel.

A typical example of the above photofabrication of three-dimensional objects will be described below. First, in a vessel equipped with a support stage arranged to optionally rise and fall, a thin layer (1) of the resin composition is formed over the support stage by slightly lowering (submerging) the support stage below the liquid surface of the resin composition. This thin layer (1) is selectively irradiated to form a cured solid resin layer (1). The photocurable resin composition is provided over this cured resin layer (1) to form a thin layer (2). This thin layer (2) is then selectively irradiated to form a new cured resin layer (2) integrally laminated over the cured resin layer (1). By repeating this process certain times using the same or different irradiated patterns, the three-dimensional object consisting of an integrally-laminated plural cured resin layer (n) can be formed.

The resulting three-dimensional object is then removed from the vessel. After the residual unreacted resin compositions remaining on the surface are removed, the object is optionally washed. As washing agents, alcohol organic solvents such as isopropyl alcohol and ethyl alcohol, ketone organic solvents such as acetone, ethyl acetate, and methyl ethyl ketone, aliphatic organic solvents represented by terpenes, and a low-viscosity heat-curable or photocurable resin can be given.

The present invention is preferably used in hard coatings, such as organic hard coatings or coatings containing silicon or metal-oxide particles. Organic hard coatings generally comprise only polyfunctional radically curable compounds. As such compounds the above described polyfunctional acrylates can be used. As an example of an "inorganic" hard coating a silicon comprising silica can be used. In a preferred embodiments, reactive silica, alumina or other metal oxide particles are used. Such component can be obtained by for example mixing an alkoxysilane compound and silica particles. More particularly, such component is prepared by reacting (i) an alkoxysilane compound having a polymerizable unsaturated group, and a urethane bonding group represented by the formula-NH(C=O)- and an organic group represented by the formula

$$- X(C=Y)NH- \quad (1)$$

and (ii) silica particles.

The amount of the alkoxy silane compound residue immobilized on silica particles is 0.01 wt.% or more, preferably 0.1 wt.% or more, and particularly preferably 1 wt.% or more. Weight percent (wt.% is determined relative to the amount of silica particles). If the amount of alkoxy-silane compound residue immobilized on the silica particles is less than 0.01 wt.%, silica particles and colloidal silica in the composition may exhibit only inadequate dispersibility, transparency, and abrasion resistance. The amount of the alkoxysilane compound in the raw material for preparing the component is 10 wt.% or more, and particularly preferably 30 wt.% or more. If this amount of alkoxysilane compound is less than 10 wt.%, the composition of the present invention may have only poor film forming capability. In addition, the proportion of silica particles in the raw material composition for preparing the component is preferably 50 wt.% or less, and particularly preferably 20 wt.% or less. If this proportion is more than 50 wt.%, the resulting resin composition of the present invention may have poor dispersibility, transparency, or abrasion resistance.

The alkoxysilane compound contains at least one polymerizable unsaturated group, urethane bond group, organic group represented by the above-described formula (1) and an alkoxysilyl group. The alkoxysilyl group is a component which bonds to the silanol group produced on the surface of silica particles by a hydrolysis or condensation reaction. The polymerizable unsaturated group is a component chemically crosslinkable with the molecules through addition polymerization in the presence of an activated radical. The above-mentioned -X(C=Y)NH- group and the urethane bonding group which are the divalent organic groups represented by the formula (1) connect the part of the molecule having the alkoxysilyl group and the part of the molecule having the polymerizable unsaturated group directly or indirectly via other groups. At the same time, these organic groups generate a moderate agglomeration force due to hydrogen bonding among molecules, thereby providing the cured products produced from the composition of the present invention with dynamic strength, excellent adhesion to a substrate and superior heat resistance.

An -S(C=O)NH- group is desirable as the -X(C=Y)NH- group.

Examples of alkoxysilane compounds include compounds shown by the general formula (2) :

$$Si(R^1O)_mR^2_{3-m}-R^3-S-C(=O)NH-R^4-NH(C=O) \qquad (2)$$

$$(Y)_nR^5-O[(C=O)NH-R^4-NH(C=O)O-X-O]_p \leftarrow$$

In the formula (2), $R^1$ is a hydrogen atom or a monovalent organic group having 1-8 carbon atoms such as methyl, ethyl, propyl, butyl, phenyl, or octyl group; $R^2$ is a hydrogen atom or a monovalent alkyl group having 1-3 carbon atoms; and m is 1, 2, or 3; $R^3$ is a divalent organic group having 1-3 carbon atoms; $R^4$ is a divalent organic group having a molecular weight of 14-10,000, preferably 78-1,000, such as linear alkylene groups, divalent alicyclic or polycyclic organic groups; X is a divalent organic group preferably obtained from an addition reaction between a compound having at least two active hydrogen atoms and an isocyanate group; $R^5$ is an organic group with a valence of (n+1), which is selected from linear, branched, or cyclic saturated hydrocarbon groups, unsaturated hydrocarbon groups and alicyclic groups; Y is a monovalent organic group having a polymerizable unsaturated group capable of binding molecules by cross-linking reaction in the presence of active radicals; n is an integer from 1 to 20, preferably 1-10 and more preferably 3-5; and p is 0 or 1 and Y is an organic group having a polymerizable unsaturated bond.

Examples of the divalent linear alkylene groups represented by $R^4$ include: methylene, ethylene, propylene, hexamethylene, octamethylene and dodecamethylene. Examples of divalent alicyclic or polycyclic groups represented by $R^4$ include cyclohexeylene and norbornylene. Examples of divalent aromatic group represented by $R^4$ include vinylene phenylene, naphthylene, biphenylene and polyphenylene. The divalent groups represented by $R^4$ may be substituted by alkyl groups or aryl groups and may contain an atomic group containing elements other than carbon and hydrogen atoms.

The divalent organic groups represented by X can be obtained by removing two active hydroygen atoms from a polyalkylene glycol, polyalkylene thioglycol, polyester, polyamide, polycarbonate, polyalkylene diamine, polyalkylene dicarboxylic acid, polyalkylene diol, or polyalkylene dimercaptan.

Examples of the monovalent organic group, represented by Y, having a polymerizable unsaturated bond capable of binding molecules by cross-linking reaction in the presence of active radicals include, acryloxy group, methacryloxy group, vinyl group, propenyl group, butadienyl mgroup, styryl group, ethynyl group, cinnamoyl group, maleate group and acrylamide group, with the acryloxy group being particularly desirable.

Examples of alkoxysilyl groups represented by $Si(R^1O)_mR^2_{3-m}$, include trimethoxysilyl, triethoxysilyl, triphenoxysilyl, methyldimethoxysilyl, dimethylmethoxysilyl and the like. Among these, particularly preferred groups are trimethoxysilyl and triethoxysilyl. The structural component represented by the formula $-[(C=Q)NH-R^4-NH(C=O)O-X-O]_p-$ is introduced to extend the molecular chain.

The alkoxy-silane compound can be obtained from an addition reaction of an alkoxysilane compound possessing a mercapto group, (i.e. mercapto alkoxysilane), a polyisocyanate compound and a polymerizable unsaturated compound possessing an active hydrogen group which reacts with isocyanate group through the addition reaction.

The invention will be further explained by the non-limiting examples which follow.

## Examples

### Example I and comparative experiment A

A hard coating was obtained from DSM Desotech (Desolite® 4D5-43), comprising mainly polyfunctional acrylate components. To the composition 0.1 wt% $Cp_2ZrCl_2$ was added. After cure (1J/$cm^2$, H-bulb, under nitrogen, 50 μm thickness of layer) the Konig pendulum hardness (according to DIN 53 157) was determined of the samples with and without the zirconate compound. The results were as follows:

A: without zirconate, hardness 92 sec.
I: with zirconate, hardness 148 sec.

Example II and comparative experiment B

An optical fiber coating containing 35 wt% oligomer based on PTGL (Mw 1000), IPDI and HEA, 58 wt% oligomer (ethoxylated bisphenol A-diacrylate), 6 wt% ethoxylated nonyl phenolacrylate and 0.5% stabilizer was mixed with 0.5% Irgacure 184. To one composition 0.02 wt% $Cp_2ZrCl_2$ was added. Cure rate was determined using Real Time Fourier Transform Infra Red (RT-FTIR), the rate of disappearance of the acrylate bond was calculated in % per second.
The results were as follows:

B: without zirconate, cure rate 22%/sec.
II: with zirconate, cure rate 29%/sec.

(The UV lamp used had an Intensity (I) of 22 mW).

Experiments III-V and comparative experiments C-E

Further experiments were carried out using model compositions: To 0.8 g tetrahydrofurfurylacrylate, 0.2 g 18 crown 6 and 0.01 g Irgacure 184 was added (1%). A further additive (1 wt%) was used as shown in table 1. The maximum cure rate was determined with RT-FTIR, as described in the conference paper 15 of "Radcure coatings and Inks, curing and performance" Harrogate (UK) 1998. Results are shown in Table 1. (Lamp intensity I = 135 mW).

Table 1

| Experiment | Additive | rate (mol/kg sec.) | Lewis acid strenght |
|---|---|---|---|
| C | - | 4.2 | - |
| III | LiBr | 5.8 | 35.1 |
| IV | NaBr | 5.0 | 21.0 |
| V | KBr | 4.4 | 13.6 |
| D | $ZnCl_2$ | 4.2 | 10.9 |
| E | $Bu_4NCl$ | 4.2 | 7.6 |

Experiments VI, VII, comparative experiments F, G

To 1g polyethyleneglycoldiacrylate with 1 wt% Irgacure 184 additives were added as shown in table 2. Maximum cure rates were measured with RT-FTIR, 1 J/$cm^2$ Fusion F600 H-bulb; nitrogen atmosphere of a 50 μm thick film. $Ti^{4+}$ has a Lewis acid strenght of 28. Pendulum hardness was measured as well. Results are reported in table 2.

Table 2

| Experiment | Additives | | Rate (mol/kg sec) | Hardness (sec) |
|---|---|---|---|---|
| | hard acid | soft acid | | |
| F | - | - | 9.6 | 127 |
| VI | 0.08% $Ti(OBu)_4$ | - | 10.2 | 210 |
| G | - | 1% $Bu_4NCl$ | 9.6 | 130 |
| VII | 0.08% $Ti(OBu)_4$ | 1% $Bu_4NCl$ | 11.0 | 234 |

Experiments VIII-XI, comparitive experiment H

Compositions of laurylacrylate containing 1 wt% of Irgacure 184 were used to determine conversion with NMR (Bruker AM 200, 200 MHz). Curing was as described for experiment VI. Additives were used as decribed in table 3 in an amount of 0.1 wt%.

Table 3

| Experiment | Additive | Conversion % | Lewis acid strenght |
|---|---|---|---|
| H | - | 62 | - |
| VIII | $Ti(OBu)_4$ | 68 | 28 |
| IX | $Al(OiPr)_3$ | 68 | 45 |
| X | $Zr(OBu)_4$ | 69 | 23 |
| XI | $LiCF_3CO_2$ | 68 | 35 |

Example XII and comparative experiment J

A composition was prepared by mixing 5 g hexanediolacrylate with 5 g polyethylene glycol (Mw 400) diacrylate and with 1 wt% Irgacure 184.

The cure rate as measured RT-FTIR and the pendulum hardness was measured as described above results are given in table 4.

| Experiment | Additive | Cure rate (mol/kg sec) | Hardness (sec) |
|---|---|---|---|
| J | - | 8.8 | 60 |
| XII | 0.04% $CP_2ZrCl_2$ | 9.6 | 73 |

## Claims

1. **1.** Composition comprising

    (a) at least a radiation curable component consisting of at least a radiation curable oligomer and a radiation curable diluent, at least 10% of this component having a functionality of 2 or more, this component representing at least 30% of the composition
    (b) a radical photoinitiator, the individual components of the photoinitiator being present in less than 6% by wt

    wherein the composition further comprises a Lewis acid compound, the Lewis acid having a strenght of at least about 12.

**2.** Composition according to Claim 1 wherein the Lewis acid has a strenght of about 20 or more.

**3.** Composition according to any one of Claim 1-2 wherein the composition further comprises a Lewis acid with a strenght of about 11 or less.

**4.** Composition according to any one of Claims 1-3 wherein the composition comprises an effective amount of Lewis acid as to increase the cure speed by 10%.

**5.** Composition according any one of Claims 1-4 wherein the composition comprises between 0.01-10 wt.% of Lewis acid.

**6.** Composition according to any one of Claims 1-5 wherein the Lewis acid compound an alkoxy salt of a Lewis acid ion in which the alkoxy group has 1-30 carbon atoms.

**7.** Composition according to any one of Claims 1-6 wherein the Lewis acid compound is not a metallocene.

**8.** Composition according to any one of Claims 1-7 wherein the composition is substantial solvent free.

**9.** Composition according to any one of Claims 1-8 wherein the composition further comprises a cationic curable component and a photo sensitive cationic initiator.

**10.** A method for increasing the cure speed of radiation curable compositions comprising at least one reactive diluent and at least one radical generating photoinitiator by adding a Lewis acid to the composition, the Lewis acid ion having a hardness of at least about 12.

**11.** Use of Lewis acid ions for increasing the cure speed of radical polymerisable radiation curable compositions by having 1-30% of Lewis acid ion present relative to the radical generating photoinitiator in a radiation curable composition.

**12.** Method for obtaining a substrate with at least one cured film by applying a composition according to anyone of claims 1-9, and curing the composition by applying radiation.

**13.** Substrate with at least one cured film obtained with the method according to claim 12, wherein the substrate is at least one optionally coated optical fiber, CD, DVD, plastic film, LCD, screen or optical part.

**14.** Method for manufacturing a three dimensional model by selectively curing subsequent layers of a composition according to any one of claims 1-9.

European Patent Office

# EUROPEAN SEARCH REPORT

Application Number
EP 00 20 1234

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 612 424 A (SATO SHOICHI ET AL) 18 March 1997 (1997-03-18) * claim 1 * --- | 1-12 | C08F2/50 C08F290/06 |
| X | US 4 687 806 A (MORRIS DECEASED WILLIAM J ET AL) 18 August 1987 (1987-08-18) * column 2, line 15 - column 3, line 53 * ----- | 1-5,7,8 | |

TECHNICAL FIELDS SEARCHED (Int.Cl.7)
C08F

The present search report has been drawn up for all claims

| Place of search | Date of completion of the search | Examiner |
|---|---|---|
| THE HAGUE | 12 September 2000 | Meulemans, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 20 1234

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2000

| Patent document cited in search report | Publication date | Patent family member(s) | Publication date |
|---|---|---|---|
| US 5612424 A | 18-03-1997 | EP 0463866 A | 02-01-1992 |
| | | JP 5209040 A | 20-08-1993 |
| US 4687806 A | 18-08-1987 | CA 1247287 A | 20-12-1988 |
| | | EP 0227290 A | 01-07-1987 |
| | | JP 2580574 B | 12-02-1997 |
| | | JP 62119218 A | 30-05-1987 |

EPO FORM P0459

For more details about this annex : see Official Journal of the European Patent Office, No. 12/82